# EUROPEAN PATENT APPLICATION

(11) **EP 2 287 955 A2**
(43) Date of publication of application: **23.02.2011**
(21) Application number: 09755033.9
(22) Date of filing: 28.05.2009
(51) Int. Cl.: H01M 8/10

(54) **METHOD FOR MANUFACTURING A POLYMER ELECTROLYTE MEMBRANE FOR FUEL CELL, MEMBRANE ELECTRODE ASSEMBLY, AND POLYMER ELECTROLYTE MEMBRANE TYPE FUEL CELL**

(30) Priority: 28.05.2008 KR 20080049839
(71) Applicant: LG Chem, Ltd., Youngdungpo-gu Seoul 150-721 (KR)
(72) Inventor: MOON, Go-Young, Daejeon 305-746 (KR); LEE, Won-Ho, Daejeon 302-741 (KR); JEONG, Ja-Hoon, Seoul 132-741 (KR); YOO, Hwang-Chan, Seoul 137-074 (KR); KIM, Hyuk, Daejeon 305-727 (KR)
(74) Representative: Goddar, Heinz J.
(86) International application number: PCT/KR2009/002823
(87) International publication number: WO 2009/145568

(57) **Abstract**

Provided are a method for manufacturing a polymer electrolyte membrane for a fuel cell, a membrane electrode assembly and a polymer electrolyte membrane fuel cell. The manufacturing method includes (S1) forming a plurality of grooves on a substrate; (S2) casting an ion exchange resin solution for forming an electrolyte membrane on a surface of the substrate having the plurality of grooves; (S3) drying the ion exchange resin solution to form a polymer electrolyte membrane; and (S4) separating the formed polymer electrolyte membrane from the substrate. The ion conductive electrolyte membrane manufactured by the method has the grooves formed on the surface thereof, so that a contact area with a catalyst is maximized to improve the performance of the fuel cell, and adhesion of electrodes and the electrolyte membrane is improved to enhance the interface stability with the electrodes.

## Description

### TECHNICAL FIELD

The present invention relates to a method for manufacturing a polymer electrolyte membrane for a fuel cell, a membrane electrode assembly and a polymer electrolyte membrane fuel cell.

### BACKGROUND ART

Recently, it is expected that conventional energy sources such as oil or charcoal will be exhausted, and thus interests in alternative energy are increasing. As one of the alternative energy, a fuel cell has high efficiency, does not emit a pollutional material such as NOₓ or SOₓ, and is supplied with an abundant fuel, and thus it is the center of attention.

The fuel cell is an electrical power system for converting a chemical reaction energy of a fuel and an oxidant into an electrical energy. Typically, hydrocarbon such as hydrogen, methanol or butane is used as a fuel, and oxygen is used as an oxidant.

The fuel cell includes a polymer electrolyte membrane fuel cell (PEMFC), a direct methanol fuel cell (DMFC), a phosphoric acid fuel cell (PAFC), an alkaline fuel cell (AFC), a molten carbonate fuel cell (MCFC), a solid oxide fuel cell (SOFC) and so on. Among them, the PEMFC has good energy density and high output, and thus its research and development is made briskly. The PEMFC is different from the other fuel cells in that a solid polymer electrolyte membrane is used, but not a liquid electrolyte.

For commercialization, the essential considerations of the PEMFC are currently performance improvement, life prolongation and competitive price. These three factors are affected most by a membrane electrode assembly (MEA), and the present invention relates to the MEA, in particular, an ion exchange membrane of the MEA.

The MEA indispensable to the PEMFC includes an anode, to which a hydrogen fuel is fed, and a cathode, to which air is fed. The electrochemical reaction of oxygen and hydrogen occurs at the anode and cathode to produce electricity.

However, an expensive catalyst such as platinum is used in each electrode of the MEA, resulting in high manufacturing costs. Therefore, commercialization of the PEMFC absolutely requires to reduce an amount of platinum used to manufacture the PEMFC while maintaining the performance of the MEA favorably. That is, it needs to maximize a reaction that a gaseous fuel supplied from an external source reacts with a catalyst to decompose into hydrogen ions, or an oxygen reduction reaction that hydrogen ions pass through a membrane and react with oxygen in the air to make water.

Conventionally, a process for introducing a catalyst to an MEA includes directly coating of an electrode catalyst on the surface of an ion exchange membrane, or coating a catalyst on a carbon paper and laminating the resulting product on an ion exchange membrane.

However, because the conventional process coats or laminates a catalyst on an ion exchange membrane having a relatively flat surface, it has limitations in maximizing a reaction area between the catalyst and the ion exchange membrane, adversely affecting the life of the MEA.

In other words, the conventional process manufactures an ion exchange membrane from a film having a flat surface, and thus maximization of a reaction area in the manufacture of the MEA utterly relies on a catalyst coating strategy.

As a solution, Japanese Patent Laid-open Publication No. 2000-251905 substitutes proton of the surface of an ion exchange membrane for a heavy metal, forms patterns by directly illuminating radioactive rays onto the surface of the ion exchange membrane and in turn, substitutes the proton for the heavy metal.

### DISCLOSURE

### Technical Problem

The present invention is designed to solve the problems of the prior art, and therefore it is an object of the invention to provide a method for manufacturing an ion conductive polymer electrolyte membrane having nano-scale fine patterns that are formed on the surface of the ion conductive polymer electrolyte membrane and free to change the shape.

It is another object of the invention to provide an ion conductive polymer electrolyte membrane that can reduce a usage amount of catalyst, maximize a triple phase boundary reaction area in a membrane electrolyte assembly and is excellent in interface stability with electrodes.

### Technical Solution

In order to accomplish the object, the present invention provides a method for manufacturing a polymer electrolyte membrane for a polymer electrolyte membrane fuel cell includes (S1) forming a plurality of grooves on a substrate; (S2) casting an ion exchange resin solution for forming an electrolyte membrane on a surface of the substrate having the plurality of grooves; (S3) drying the ion exchange resin solution to form a polymer electrolyte membrane; and (S4) separating the formed polymer electrolyte membrane from the substrate. The method of the present invention may vary the depth and shape of the groove depending on method for forming a groove on the substrate. The method of the present invention manufactures an electrolyte membrane by using a substrate having grooves, and thus eliminates the need of direct light irradiation on the electrolyte membrane and does not damage the surface properties of the electrolyte membrane.

In the method of the present invention, the groove may have, for example, a triangular, rectangular, semicircular or saw-like shape. The groove may have a depth of 1nm to 10µm, however the present invention is not limited in this regard.

In the method of the present invention, the substrate may be selected from the group consisting of a polymer film, a glass substrate and stainless steel, however the present invention is not limited in this regard.

In the method of the present invention, the ion exchange resin solution for forming a polymer electrolyte membrane is not limited to a specific ion exchange resin if it can form an electrolyte membrane. Typically, the ion exchange resin solution may be selected from the group consisting of perfluorosulfonic acid, hydrocarbon-based sulfonic acid and hydrocarbon-based phosphoric acid, however the present invention is not limited in this regard.

The polymer electrolyte membrane for a fuel cell according to the present invention has a plurality of grooves formed on at least one surface thereof by the manufacturing method of the present invention. The electrolyte membrane of the present invention maximizes a triple phase reaction area in a membrane electrode assembly through the fine grooves formed on at least one surface thereof, and then can reduce a usage amount of catalyst. And, the electrolyte membrane of the present invention can improve the interface stability with electrodes thanks to anchoring effects of the grooves.

And, the grooves of one surface of the electrolyte membrane may be different from the grooves of the other surface in depth or shape.

The polymer electrolyte membrane of the present invention can be used to a membrane electrode assembly or a polymer electrolyte membrane fuel cell.

### DESCRIPTION OF DRAWINGS

These and other features, aspects, and advantages of preferred embodiments of the present invention will be more fully described in the following detailed description, taken accompanying drawings. In the drawings:
FIG. 1 is a schematic view of fine patterns formed on a solid substrate according to the present invention;
FIG. 2 is a schematic cross-sectional view of a membrane electrode assembly according to the present invention;
FIG. 3 is a schematic view of a fuel cell according to the present invention; and
FIG. 4 is a cross-sectional image of an electrolyte membrane with grooves according to an embodiment of the present invention.

### MODE FOR INVENTION

Hereinafter, the present invention will be described in detail. Prior to the description, it should be understood that the terms used in the specification and appended claims should not be construed as limited to general and dictionary meanings, but interpreted based on the meanings and concepts corresponding to technical aspects of the present invention on the basis of the principle that the inventor is allowed to define terms appropriately for the best explanation.

A method for manufacturing a polymer electrolyte membrane starts with forming a plurality of grooves on a substrate (S1).

In the present invention, a method for forming a groove on a substrate is not limited to a specific method if it is capable of forming several nano-level groove or tens micro-level groove. For example, the method includes photolithography, nanoimprint lithography, electronic beam lithography and so on, however the present invention is not limited in this regard.

Through the above-mentioned groove forming method, the depth and shape of the groove on the substrate may be freely controlled according to necessity.

In the present invention, the depth of the groove may be controlled according to necessity of an ordinary person skilled in the art. For example, the depth of the groove may be controlled to 1nm to 10µm, however the present invention is not limited in this regard.

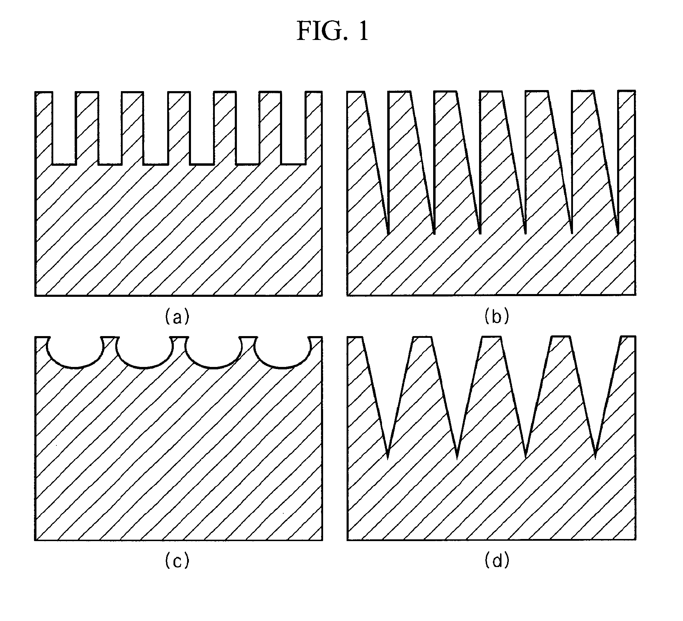

And, the shape of the groove may be controlled depending on groove forming methods. Thus, in the present invention, the shape of the groove can be selected according to necessity of an ordinary person skilled in the art. For example, the shape of the groove includes triangular, rectangular, semicircular or saw-like shapes, however the present invention is not limited in this regard. Various shapes of grooves formed by photolithography are schematically shown in FIG. 1.

The substrate with a plurality-of grooves according to the present invention is not limited to a specific type if it is a substrate where a groove can be formed by the above-mentioned groove forming method and an ion exchange resin solution for forming an electrolyte membrane can be then cast. For example, the substrate may be selected from the group consisting of a polymer film, a glass substrate and stainless steel. The polymer film may include polyethyleneterephthalate (PET), polyimide and so on, however the present invention is not limited in this regard.

In the method for manufacturing a polymer electrolyte membrane according to the present invention, next, an ion exchange resin solution for forming an electrolyte membrane is cast on a surface of the substrate having the plurality of grooves (S2).

The ion exchange resin solution is not limited to a specific ion exchange resin if it is capable of forming an electrolyte membrane. Typically, the ion exchange resin solution may be selected from the group consisting of perfluorosulfonic acid, hydrocarbon-based sulfonic acid and hydrocarbon-based phosphoric acid, however the present invention is not limited in this regard.

Optionally, a second substrate with a plurality of grooves formed by the step (S1) may be put on the ion exchange resin solution cast on the substrate such that a surface of the second substrate having the grooves is contacted with the ion exchange resin solution. In this way, an electrolyte membrane of which both surfaces have grooves can be obtained. Selectively, the grooves of the first substrate may be equal to or different from those of the second substrate in depth and/or shape. In the case that a polymer electrolyte membrane of the present invention has grooves formed on both surfaces thereof, the grooves of one surface may be equal to or different from the grooves of the other surface in depth and/or shape.

In the method for manufacturing a polymer electrolyte membrane according to the present invention, the ion exchange resin solution cast on the substrate having the plurality of fine grooves is dried to form a polymer electrolyte membrane (S3).

In the manufacturing method of the present invention, the drying method is not limited to a specific drying method. Typically, the drying method may be selected from the group consisting of natural drying and hot-air drying.

After drying, the resulting polymer electrolyte membrane is separated from the substrate (S4).

As mentioned above, the method for manufacturing a polymer electrolyte membrane can manufacture a polymer electrolyte membrane for a polymer electrolyte membrane fuel cell, having a plurality of grooves on at least one surface thereof. The polymer electrolyte membrane of the present invention may have a plurality of grooves on one or both surfaces thereof through a casting process. In the case that grooves are formed on only one surface of the polymer electrolyte membrane, it is preferable to form the grooves on a side in contact with an air electrode (cathode) having a relatively lower reaction rate.

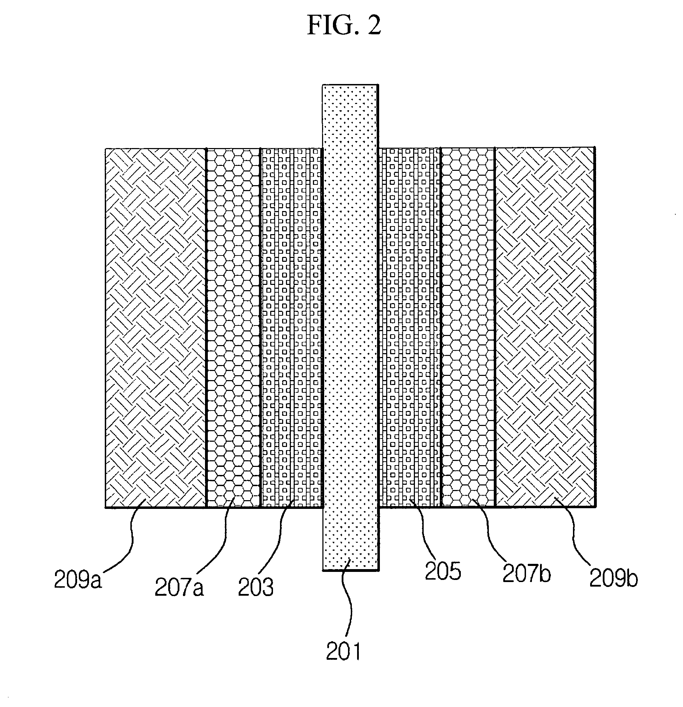

And, a membrane electrode assembly of the present invention includes the above-mentioned ion conductive polymer electrolyte membrane. FIG.2 is a cross-sectional view of a membrane electrode assembly according to an embodiment of the present invention. Referring to FIG. 2, the membrane electrode assembly of the present invention includes an ion conductive polymer electrolyte membrane 201 described above, and an anode 203, 207a and 209a and a cathode 205, 207b and 209b located at the opposite side of the ion conductive polymer electrolyte membrane 201. The anode 203, 207a and 209a includes a catalyst layer 203 and gas diffusion layers 207a and 209a, and the cathode 205, 207b and 209b includes a catalyst layer 205 and gas diffusion layers 207b and 209b.

Preferably, in the catalyst layer 203 of the anode where an oxidation reaction of a fuel occurs, a catalyst may be selected from the group consisting of platinum, ruthenium, osmium, platinum-ruthenium alloy, platinum-osmium alloy, platinum-palladium alloy and platinum-transition metal alloy. And, in the catalyst layer 205 of the cathode where a reduction reaction of an oxidant occurs, a catalyst may be platinum or platinum-transition metal alloy. The catalysts may be used by themselves or be supported by a carbon-based carrier.

A process for introducing the catalyst layers 203 and 205 may be performed by a typical method known in the art. For example, the catalyst layers 203 and 205 may be formed by directly coating a catalyst ink on the ion conductive electrolyte membrane 201 or coating a catalyst ink on the gas diffusion layers 207a, 207b and 209a, 209b, respectively. At this time, a method for coating the catalyst ink is not limited to a specific method, however the method may be spray coating, tape casting, screen printing, blade coating, die coating or spin coating. Typically, the catalyst ink may include a catalyst, a polymer ionomer and a solvent.

The gas diffusion layers 207a, 207b and 209a, 209b act as a current conductor and flow channels of a reaction gas and water, and have a porous structure. Thus, the gas diffusion layers 207a, 207b and 209a, 209b include conductive substrates 209a and 209b, respectively. Preferably, the conductive substrates 209a and 209b may be made from a carbon paper, a carbon cloth or a carbon felt. The gas diffusion layers 207a, 207b and 209a, 209b include microporous layers 207a and 207b between the catalyst layers 203 and 205 and the conductive substrates 209a and 209b, respectively. The microporous layers 207a and 207b are configured to improve the performance of a fuel cell under low humidity conditions, and to reduce an amount of water flowing out of the gas diffusion layers 207a, 207b and 209a, 209b so that the ion conductive electrolyte membrane 201 is in a sufficient wet state.

The above-mentioned ion conductive polymer electrolyte membrane and membrane electrode assembly of the present invention can be effectively used to a polymer electrolyte membrane fuel cell.

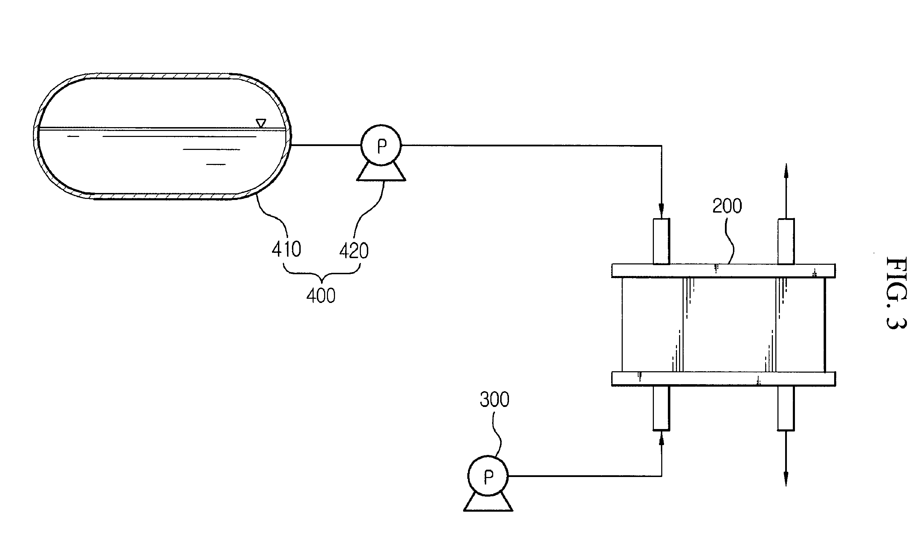

The present invention also provides a fuel cell including the membrane electrode assembly of the present invention. FIG. 3 is a schematic view of a fuel cell according to an embodiment of the present invention. Referring to FIG. 3, the fuel cell of the present invention includes a stack 200, a fuel supply unit 400 and an oxidant supply unit 300.

The stack 200 includes at least one membrane electrode assembly of the present invention. In the case of two or more membrane electrode assemblies, the stack 200 includes at least one separator interposed between the membrane electrode assemblies. The separator is configured to block an electrical connection of the membrane electrode assemblies, to transmit a fuel and an oxidant from an external source to the membrane electrode assemblies, and to connect an anode and a cathode in series.

The fuel supply unit 400 is configured to supply a fuel to the stack 200, and includes a fuel tank 410 for storing the fuel and a pump 420 for supplying the fuel stored in the fuel tank 410 to the stack 200. The fuel may be a hydrogen or hydrocarbon fuel of gas or liquid state. For example, the hydrocarbon fuel may be methanol, ethanol, propanol, butanol or natural gas.

The oxidant supply unit 300 is configured to supply an oxidant to the stack 200. Typically, oxygen is used as the oxidant. Oxygen or air is used by injection of the pump 300.

Hereinafter, the preferred embodiments of the present invention are described in detail. However, it should be understood that the detailed description and specific examples, while indicating preferred embodiments of the invention, are given by way of illustration only, since various changes and modifications within the spirit and scope of the invention will become apparent to those skilled in the art from this detailed description.

### EMBODIMENT

A polyethyleneterephthalate (PET) resin was gone through photolithography to form fine patterns having a rectangular shape and about 270nm scale.

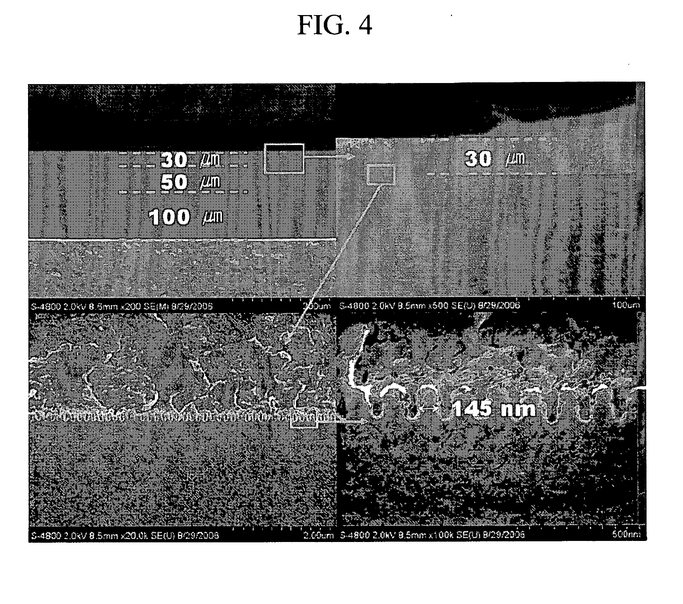

An ion conductive resin solution was cast on the PET resin having the fine patterns, hot-air dried at 30°C, and separated from a substrate to manufacture a polymer electrolyte membrane having a plurality of rectangular grooves formed on one surface thereof. A cross-sectional image of the grooves is shown in FIG. 4.

### INDUSTRIAL APPLICABILITY

As described above, the method for manufacturing an ion conductive polymer electrolyte membrane uses a substrate having a plurality of grooves, and thus can freely control the shape of the fine patterns while not damaging the surface of the polymer electrolyte membrane. And, the ion conductive polymer electrolyte membrane of the present invention has a plurality of grooves formed on the surface thereof, so that a contact area with a catalyst is maximized, and a usage amount of the catalyst can be reduced. And, a triple phase reaction area in a membrane electrode assembly can be maximized, and interface stability with electrodes is improved thanks to anchoring effects of the grooves. Thus, a membrane electrode assembly and a fuel cell using the ion conductive polymer electrolyte membrane can be remarkably improved in performance.

## Claims

1. A method for manufacturing a polymer electrolyte membrane for a polymer electrolyte membrane fuel cell, comprising:
(S1) forming a plurality of grooves on a substrate;
(S2) casting an ion exchange resin solution for forming an electrolyte membrane on a surface of the substrate having the plurality of grooves;
(S3) drying the ion exchange resin solution to form a polymer electrolyte membrane; and
(S4) separating the formed polymer electrolyte membrane from the substrate.

2. The method for manufacturing a polymer electrolyte membrane for a polymer electrolyte membrane fuel cell according to claim 1,
wherein the substrate is selected from the group consisting of a polymer film, a glass substrate and stainless steel.

3. The method for manufacturing a polymer electrolyte membrane for a polymer electrolyte membrane fuel cell according to claim 1,
wherein the groove has a triangular, rectangular, semicircular or saw-like shape.

4. The method for manufacturing a polymer electrolyte membrane for a polymer electrolyte membrane fuel cell according to claim 1,
wherein the groove has a depth of 1 nm to 10 µm.

5. The method for manufacturing a polymer electrolyte membrane for a polymer electrolyte membrane fuel cell according to claim 1,
wherein the ion exchange resin solution is selected from the group consisting of perfluorosulfonic acid, hydrocarbon-based sulfonic acid and hydrocarbon-based phosphoric acid.

6. The method for manufacturing a polymer electrolyte membrane for a polymer electrolyte membrane fuel cell according to claim 1, further comprising:
after the step (S2) of casting the ion exchange resin solution for forming an electrolyte membrane, putting a second substrate having a plurality of grooves on the cast ion exchange resin solution such that a surface of the second substrate having the grooves is contacted with the ion exchange resin solution.

7. The method for manufacturing a polymer electrolyte membrane for a polymer electrolyte membrane fuel cell according to claim,
wherein the grooves of one surface of the electrolyte membrane are different from the grooves of the other surface in depth or shape.

8. A membrane electrode assembly for a polymer electrolyte membrane fuel cell, comprising:
a cathode;
an anode; and
an electrolyte membrane,
wherein the electrolyte membrane has a plurality of grooves formed on at least one surface thereof by the manufacturing method defined in any one of claims 1 to 7.

9. A polymer electrolyte membrane fuel cell, comprising:
a stack comprising (i) at least one membrane electrode assembly defined in claim 8, and in case the stack comprises at least two assemblies, (ii) at least one separator interposed between at least one pair of adjacent membrane electrode assemblies;
a fuel supply unit for supplying a fuel to the stack; and
an oxidant supply unit for supplying an oxidant to the stack.
